# EUROPÄISCHE PATENTSCHRIFT

(11) **EP 4 298 356 B1**
(45) Veröffentlichungstag und Bekanntmachung des Hinweises auf die Patenterteilung: **23.04.2025**
(21) Anmeldenummer: 22711434.5
(22) Anmeldetag: 22.02.2022
(51) Int. Cl.: F16D 55/00, F16D 49/00

(54) **ELEKTROMECHANISCHER ANTRIEB**
ELECTROMECHANICAL DRIVE
ENTRAÎNEMENT ÉLECTROMÉCANIQUE

(30) Priorität: 23.02.2021 AT 501222021
(43) Veröffentlichungstag der Anmeldung: 03.01.2024
(73) Patentinhaber: TRUMPF Maschinen Austria GmbH & Co. KG., 4061 Pasching (AT)
(72) Erfinder: SPEZIALI, Stefano, 06034 Foligno (IT)
(74) Vertreter: Burger, Hannes
(86) Internationale Anmeldenummer: PCT/AT2022/060048
(87) Internationale Veröffentlichungsnummer: WO 2022/178563

(56) Entgegenhaltungen:
- EP-A2- 1 524 455
- DE-A1- 102019 004 953

## Beschreibung

Die Erfindung betrifft einen elektromechanischen Antrieb gemäß dem Oberbegriff des Anspruch 1. Die Erfindung betrifft auch eine Umformmaschine mit einem Pressantrieb.

Die EP1524455A2 offenbart im Zusammenhang mit einem elektrisch betätigten linearen Aktuator in Form eines Spindelantriebes eine Bremseinrichtung, welche eine axial bewegbare erste Kupplungsscheibe und eine mit der Antriebswelle über eine Nabe zusammenwirkende zweite Kupplungsscheibe umfasst. Die erste Kupplungsscheibe drückt die zweite Kupplungsscheibe gegen eine dritte Kupplungsscheibe. Durch Betätigung einer Spule wird die erste Kupplungsscheibe in eine freigebende Stellung bewegt, sodass die zweite Kupplungsscheibe mit der Antriebswelle rotieren kann.

Die EP2333380A1 offenbart ebenfalls im Zusammenhang mit einem linearen Aktuator eine Bremseinrichtung mit einer rotierenden Bremsscheibe und einer stationären Bremsscheibe, welche relativ zur rotierenden Bremsscheibe bewegbar ist und durch Reibung eine Bremsung der Antriebswelle ermöglicht.

Die DE102019004953A1 offenbart eine Brems- und/oder Klemmvorrichtung für eine gegenüber einem Grundkörper geführte Welle mit einer Betätigungsbaugruppe und mit einer Wellenanbindungsbaugruppe, die als Bremsscheibe einen geschlitzten oder mehrfach geteilten Ring aufweist. Die Betätigungsbaugruppe hat ein elastisches Spaltgehäuse, das mit seinen Zangenbacken - beim Bremsen oder Klemmen - zangenartig an der Bremsscheibe anliegt.

Die sich aus dem Stand der Technik ergebenden Nachteile bestehen insbesondere darin, dass die Bremswirkung, insbesondere das Bremsmoment bzw. die Bremskraft, für bestimmte Anwendungen zu gering ist. Der Bremsvorgang, d.h. die Zeit, die zwischen einer Betätigung der Bremseinrichtung und der Bremswirkung (z.B. Stillstand des Antriebs oder Abbremsung auf ein gewünschtes Niveau) ergeht, ist dabei oftmals zu lang.

Aufgabe der vorliegenden Erfindung war es, die Nachteile des Standes der Technik zu überwinden und einen elektromechanischen Antrieb zur Verfügung zu stellen, mit dem eine unmittelbare und schnell einsetzende Bremswirkung erzielt werden kann. Ebenso sollen die Bremswirkung und die Effizienz des Bremsvorganges erhöht werden. Dadurch soll insbesondere die Sicherheit bei Anwendungen, in denen Bedienpersonen im Gefahrenbereich arbeiten bzw. hantieren und Antriebe aus diesem Grund unter bestimmten Bedingungen unmittelbar zum Stillstand kommen müssen, erhöht werden. Die Zuverlässigkeit, Leistungsfähigkeit und Einsetzbarkeit eines elektromechanischen Antriebes in verschiedensten Anwendungsgebieten soll durch eine Verbesserung der Bremseinrichtung erhöht werden.

Diese Aufgabe wird durch einen elektromechanischen Antrieb der eingangs genannten Art dadurch gelöst, dass die Bremsscheibe
- einen inneren Bereich,
- einen ringförmig um die Rotationsachse verlaufenden Reibflächenbereich mit einer ersten Reibfläche, die an einer ersten Seite der Bremsscheibe ausgebildet ist, und einer zweiten Reibfläche, die an der zweiten, der ersten Seite gegenüberliegenden Seite der Bremsscheibe ausgebildet ist, und
- einen Zwischenbereich, der zwischen dem Reibflächenbereich und dem inneren Bereich um die Rotationsachse verläuft,
aufweist, und dass an dem Bremselement eine erste Gegenfläche ausgebildet ist, die der ersten Reibfläche zugewandt ist und in der Bremsstellung mit der ersten Reibfläche zusammenwirkt, und wobei der Reibflächenbereich der Bremsscheibe zwischen der ersten Gegenfläche und einer zweiten Gegenfläche, die der zweiten Reibfläche zugewandt ist und in der Bremsstellung mit der zweiten Reibfläche zusammenwirkt, angeordnet ist, dadurch gekennzeichnet, dass der Zwischenbereich ein Verformungsbereich ist, der durch die Wirkung des Bremselementes auf die Bremsscheibe in axialer Richtung elastisch verformbar ist, und dass in der gelösten Stellung der Bremseinrichtung die erste Reibfläche und die erste Gegenfläche von einer parallelen Ausrichtung abweichen und/oder zueinander geneigt sind und/oder die zweite Reibfläche und die zweite Gegenfläche von einer parallelen Ausrichtung abweichen und/oder zueinander geneigt sind.

Das Bremselement rotiert nicht mit dem Rotationsteil. Mit anderen Worten: das Bremselement ist hinsichtlich der Rotation des Rotationsteils bzw. der mit dem Rotationsteil rotationsverbundenen Bremsscheibe stationär. Das Bremselement übt in der Bremsstellung durch Reibschluss mit der Bremsscheibe eine Bremswirkung aus. Gemäß der Erfindung befindet sich der Reibflächenbereich in radialer Richtung außerhalb des inneren Bereichs und auch außerhalb des Zwischenbereichs. Während der innere Bereich als Befestigungsbereich (zur Befestigung an den Rotationsteil) dienen kann, ist der Zwischenbereich vorzugsweise verformbar ausgebildet. Es ist bevorzugt, wenn der innere Bereich und der Zwischenbereich auch in der Bremsstellung nicht in Kontakt mit dem Bremselement ist. Die Bremswirkung ist am höchsten im peripheren Bereich. Zum einen ist dort die Geschwindigkeit am größten, zum anderen ist dort auch das größte Bremsmoment aufbringbar.

Das Bremselement ist in axialer Richtung von der gelösten Stellung in die Bremsstellung bewegbar. Durch diese Bewegung wird der Bremsspalt verringert, bis das Bremselement mit seiner ersten Gegenfläche gegen die erste Reibfläche der Bremsscheibe drückt.

Über die radial weiter innen liegenden Bereiche (innerer Bereich und Zwischenbereich) wird das Bremsmoment auf den Rotationsteil übertragen.

Die Bremsscheibe kann - mit ihrem inneren Bereich - relativ zum Rotationsteil axial fixiert sein. Das Bremselement drückt in der Bremsstellung gegen den weiter außen liegenden Reibflächenbereich, wodurch eine Verformungskraft auf die Bremsscheibe ausgeübt wird. Letztere möchte sich in axialer Richtung verbiegen.

Der Rotationsteil kann z.B. eine Antriebswelle, eine Gewindemutter (z.B. bei einem Spindelantrieb), ein Rotor (eines Elektromotors) oder jedes beliebige, sich drehende Element eines Antriebsstranges sein.

Eine bevorzugte Ausführungsform zeichnet sich dadurch aus, dass der Zwischenbereich der Bremsscheibe - sowohl in der gelösten Stellung als auch in der Bremsstellung - kontaktfrei zu dem Bremselement ist und/oder dass in der Bremsstellung der Kontakt des Bremselementes mit der Bremsscheibe auf die erste Reibfläche beschränkt ist. Durch diese Maßnahme wird bewirkt, dass der Reibschluss nur im Bereich des Reibflächenbereichs entsteht, während der innere Bereich und der Zwischenbereich mit dem Bremselement nicht in direkten Kontakt gelangen. Insbesondere der Zwischenbereich kann so eine zusätzliche Funktionalität wahrnehmen.

Die Erfindung zeichnet sich dadurch aus, dass der Zwischenbereich ein Verformungsbereich ist, der durch die Wirkung des Bremselementes auf die Bremsscheibe in axialer Richtung elastisch verformbar ist. Im Gegensatz zu bekannten Lösungen kann hier die Bremsscheibe an dem Rotationsteil axial fixiert sein. Überhaupt kann eine starre Verbindung zwischen Bremsscheibe und Rotationsteil vorgesehen werden. Dadurch wird die Bremswirkung erhöht, insbesondere wird die Bremskraft unmittelbar auf den Rotationsteil übertragen.

Eine bevorzugte Ausführungsform zeichnet sich dadurch aus, dass im Verformungsbereich Ausschnitte, vorzugsweise in Form von Durchbrechungen, und/oder Materialschwächungen ausgebildet sind. Durch die Anzahl der Ausschnitte kann der Grad der Verformbarkeit festgelegt und für verschiedene Anwendungsgebiete optimiert werden. Alternativ kann sich der Verformungsbereich auch durch geringere Materialdicke im Vergleich zum inneren Bereich und/oder Reibflächenbereich auszeichnen.

Eine bevorzugte Ausführungsform zeichnet sich dadurch aus, dass im Verformungsbereich die Gesamtfläche der Ausschnitte zumindest so groß ist wie die Gesamtfläche, die vom verbleibenden Material eingenommen wird. Dadurch wird eine ausreichende Verformung gewährleistet, insbesondere für den Fall, dass der Reibflächenbereich in der Bremsstellung gegen eine zweite Gegenfläche gedrückt wird.

Die Erfindung zeichnet sich dadurch aus, dass der Reibflächenbereich eine zweite Reibfläche, die an der zweiten, der ersten Seite gegenüberliegenden Seite der Bremsscheibe ausgebildet ist, aufweist, und dass der Reibflächenbereich der Bremsscheibe zwischen der ersten Gegenfläche und einer zweiten Gegenfläche, die der zweiten Reibfläche zugewandt ist und in der Bremsstellung mit der zweiten Reibfläche zusammenwirkt, angeordnet ist. In der gelösten Stellung der Bremseinrichtung ist zwischen den jeweiligen zusammenwirkenden Flächen ein Bremsspalt ausgebildet. Durch einen verformbaren Zwischenbereich kann auf elegante Weise - und alternativ zu einer axialen Verschiebbarkeit der Bremsscheibe relativ zum Rotationsteil - gewährleistet werden, dass durch eine Verformung der Bremsscheibe in axialer Richtung der/die Bremsspalte vollflächig geschlossen werden.

Eine bevorzugte Ausführungsform zeichnet sich dadurch aus, dass die erste Gegenfläche ringförmig ist und/oder dass die zweite Gegenfläche ringförmig ist.

Eine bevorzugte Ausführungsform zeichnet sich dadurch aus, dass der Reibflächenbereich in der Peripherie der Bremsscheibe angeordnet ist, wobei vorzugsweise die erste Reibfläche und/oder die zweite Reibfläche bis an den Außenrand der Bremsscheibe reichen. Wie bereits erwähnt ist die Bremswirkung im äußersten Bereich der Bremsscheibe am größten.

Eine bevorzugte Ausführungsform zeichnet sich dadurch aus, dass die Differenz zwischen dem Außenradius und dem Innenradius des Reibflächenbereiches höchstens 1/3, vorzugsweise höchstens 1/4, des Außenradius der Bremsscheibe beträgt.

Eine bevorzugte Ausführungsform zeichnet sich dadurch aus, dass der elektromechanische Antrieb ein Gehäuse aufweist und dass die zweite Gegenfläche an einem Gehäuseteil oder an einem mit dem Gehäuseteil fest verbundenen Element ausgebildet ist. Durch diese Maßnahme kann das Bremsmoment direkt in das (stationäre) Gehäuse eingeleitet werden. Auch die in Form von Wärme abgegebene Bremsenergie kann ins Gehäuse übergehen, wodurch auf eine aufwendige Bremskühlung verzichtet werden kann, da die Wärme direkt über das Gehäuse nach außen geleitet werden kann.

Eine bevorzugte Ausführungsform zeichnet sich dadurch aus, dass der innere Bereich der Bremsscheibe zumindest eine, vorzugsweise mehrere - vorzugsweise ringförmig angeordnete - Befestigungsschnittstellen, vorzugsweise in Form von Löchern, zur Befestigung der Bremsscheibe an den Rotationsteil aufweist, wobei vorzugsweise die Anzahl der Befestigungsschnittstellen größer als 10 und/oder größer als die Anzahl der Aus-schnitte im Verformungsbereich ist. Besonders bevorzugt ist hier eine starre Verbindung zwischen Bremsscheibe und Rotationsteil, welche z.B. durch Schrauben gewährleistet werden kann.

Eine bevorzugte Ausführungsform zeichnet sich dadurch aus, dass in der gelösten Stellung der Bremseinrichtung die erste Reibfläche und die erste Gegenfläche von einer parallelen Ausrichtung abweichen und/oder dass in der gelösten Stellung der Bremseinrichtung die zweite Reibfläche und die zweite Gegenfläche von einer parallelen Ausrichtung abweichen. Mit dieser Maßnahme kann z.B. der Druck an einem weiter innenliegenden Abschnitt des Reibflächenbereiches verringert werden, während er in einem weiter außen liegenden Abschnitt relativ dazu erhöht werden kann. Dadurch lässt sich bei entsprechender Dimensionierung der Reib- bzw. Gegenfläche(n) (bzw. des Bremsspaltes) eine gleichmäßigere Druckverteilung erreichen. Dies führt zu weniger Verschleiß und erhöhter Lebensdauer. Diese Vorteile lassen sich beispielsweise auch durch folgende bevorzugte Ausführungsformen erreichen.

Eine bevorzugte Ausführungsform zeichnet sich dadurch aus,
dass der Abstand zwischen der ersten Reibfläche und der ersten Gegenfläche in radialer Richtung abnimmt, wobei vorzugsweise dieser Abstand an dem radial äußeren Rand der ersten Reibfläche um höchstens 1mm, bevorzugt um höchstens 0,2mm, kleiner ist als an dem radial inneren Rand der ersten Reibfläche,
und/oder dass der Abstand zwischen der zweiten Reibfläche und der zweiten Gegenfläche in radialer Richtung abnimmt, wobei vorzugsweise dieser Abstand an dem radial äußeren Rand der zweiten Reibfläche um höchstens 1mm, bevorzugt um höchstens 0,2mm, kleiner ist als an dem radial inneren Rand der zweiten Reibfläche.

In der Bremsstellung wird sodann der Druck an einem weiter innenliegenden Abschnitt des Reibflächenbereiches verringert, während er in einem weiter außen liegenden Abschnitt relativ dazu erhöht wird. Außerdem kann dadurch in gewissem Ausmaß eine Anpassung an eine - sich während des Bremsvorganges in axialer Richtung verbiegende - Bremsscheibe erfolgen.

Eine bevorzugte Ausführungsform zeichnet sich dadurch aus, dass in der gelösten Stellung der Bremseinrichtung die erste Reibfläche und die erste Gegenfläche zueinander geneigt sind und/oder dass in der gelösten Stellung der Bremseinrichtung die zweite Reibfläche und die zweite Gegenfläche zueinander geneigt sind.

Eine bevorzugte Ausführungsform zeichnet sich dadurch aus, dass die erste Reibfläche und/oder die erste Gegenfläche in radialer Richtung einen gekrümmten Verlauf aufweisen und/oder dass die zweite Reibfläche und/oder die zweite Gegenfläche in radialer Richtung einen gekrümmten Verlauf aufweisen.

Eine bevorzugte Ausführungsform zeichnet sich dadurch aus, dass der innere Bereich der Bremsscheibe an dem Rotationsteil axial fixiert ist und/oder dass der innere Bereich der Bremsscheibe mit dem Rotationsteil starr verbunden ist, vorzugsweise über Schrauben.

Eine bevorzugte Ausführungsform zeichnet sich dadurch aus, dass zwischen dem inneren Bereich der Bremsscheibe und dem Rotationsteil ein erster Distanzring angeordnet ist, wobei vorzugsweise der innere Bereich der Bremsscheibe zwischen dem ersten Distanzring und einem zweiten Distanzring eingezwängt ist, vorzugsweise mittels Schrauben. Der/die Distanzringe können dazu verwendet werden, die Relativposition der Reibfläche(n) relativ zu der/den Gegenfläche(n) einzustellen bzw. zu optimieren. Sie sorgen zudem für eine gleichmäßige Druckverteilung.

Eine bevorzugte Ausführungsform zeichnet sich dadurch aus, dass der elektromechanische Antrieb ein Spindelantrieb ist, wobei der Rotationsteil, mit dem die Bremsscheibe verbunden ist, in Form einer Gewindemutter ausgebildet ist, welche mit der Spindel des Spindelantriebs zusammenwirkt.

Eine bevorzugte Ausführungsform zeichnet sich dadurch aus, dass die Bremsscheibe einen scheibenförmigen Grundkörper aufweist und dass die erste Reibfläche und/oder die zweite Reibfläche durch einen vorzugsweise ringförmigen Bremsbelag gebildet wird, welcher auf dem Grundkörper aufgebracht ist und/oder in axialer Richtung über den Grundkörper vorsteht.

Eine bevorzugte Ausführungsform zeichnet sich dadurch aus, dass das Bremselement in Richtung Bremsstellung vorgespannt ist. Unabhängig von einer Betätigung oder Bestromung kann hier also durch passive (Feder)Elemente die Bremsstellung gehalten werden.

Eine bevorzugte Ausführungsform zeichnet sich dadurch aus, dass das Bremselement in Richtung Bremsstellung durch eine Vielzahl von Federn, die ringförmig und vorzugsweise mit der ersten Gegenfläche überlappend angeordnet sind, vorgespannt ist.

Eine bevorzugte Ausführungsform zeichnet sich dadurch aus, dass die Federn in einem abnehmbaren Gehäuseteil des elektromechanischen Antriebes eingesetzt sind.

Eine bevorzugte Ausführungsform zeichnet sich dadurch aus, dass die Bremseinrichtung einen Aktor, vorzugsweise in Form eines Elektromagneten, umfasst, durch den das Bremselement in die gelöste Stellung und/oder in die Bremsstellung bringbar ist, wobei vorzugsweise der Aktor in einem abnehmbaren Gehäuseteil des elektromechanischen Antriebes eingesetzt ist. Eine solche Variante hat den Vorteil, dass bei Stromausfall oder einem Ansteuerungsfehler die Elektromagnete stromlos sind und die Bremseinrichtung automatisch in die Bremsstellung fällt.

Eine bevorzugte Ausführungsform zeichnet sich dadurch aus, dass der Motor und die Bremseinrichtung in einem gemeinsamen Gehäuse untergebracht sind. Dadurch wird die Unmittelbarkeit der Bremswirkung erhöht, da das Bremsen im unmittelbaren Bereich der Generierung des Motormoments erfolgt.

Das Ziel wird auch erreicht mit einer Umformmaschine, insbesondere Biegemaschine, vorzugsweise einer Biegepresse, mit zumindest einem Antrieb für die Arbeitsbewegung, insbesondere einem Pressantrieb, wobei der zumindest eine Antrieb ein erfindungsgemäßer elektromechanischer Antrieb ist. Eine solche Umformmaschine kann einen ersten (z.B. oberen) Werkzeugträger und einen zweiten (z.B. unteren) Werkzeugträger umfassen, deren Relativbewegung die Arbeitsbewegung ist. Der oben beschriebene elektromechanische Antrieb eignet sich besonders gut für den Einsatz in einer Umformmaschine, da die vorgeschlagene Bremseinrichtung besonders schnell reagiert und damit insbesondere das Bedienpersonal zuverlässig geschützt (insbesondere in Fällen, in denen eine Abschaltung oder ein Stopp/Verlangsamung der Arbeitsbewegung für die Sicherheit relevant ist) aber auch Werkstücke vor falschen bzw. fehlerbehafteten Bearbeitungsroutinen "geschützt" werden.

Zum besseren Verständnis der Erfindung wird diese anhand der nachfolgenden Figuren näher erläutert.

Es zeigen jeweils in stark vereinfachter, schematischer Darstellung:
- Fig. 1: einen elektromechanischen Antrieb im Schnitt;
- Fig. 2: einen Ausschnitt einer Bremseinrichtung mit perspektivischem Einblick;
- Fig. 3: eine Bremseinrichtung im Schnitt;
- Fig. 4: eine Bremsscheibe;
- Fig. 5: das Zusammenwirken des Bremselementes und der Bremsscheibe;
- Fig. 6: eine Bremseinrichtung in gelöster Stellung;
- Fig. 7: eine Bremseinrichtung in gelöster Stellung;
- Fig. 8: eine Bremseinrichtung mit zweiter Brems- und Gegenfläche in gelöster Stellung;
- Fig. 9: eine Bremseinrichtung mit zweiter Brems- und Gegenfläche in gelöster Stellung;
- Fig. 10: eine Bremseinrichtung mit vorgespanntem Bremselement;
- Fig. 11: einen Gehäuseteil mit Aufnahmen für Federn und einer Aufnahme für einen Aktor;
- Fig. 12: eine Umformmaschine, in Form einer Biegepresse, mit elektromechanischen Antrieben.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

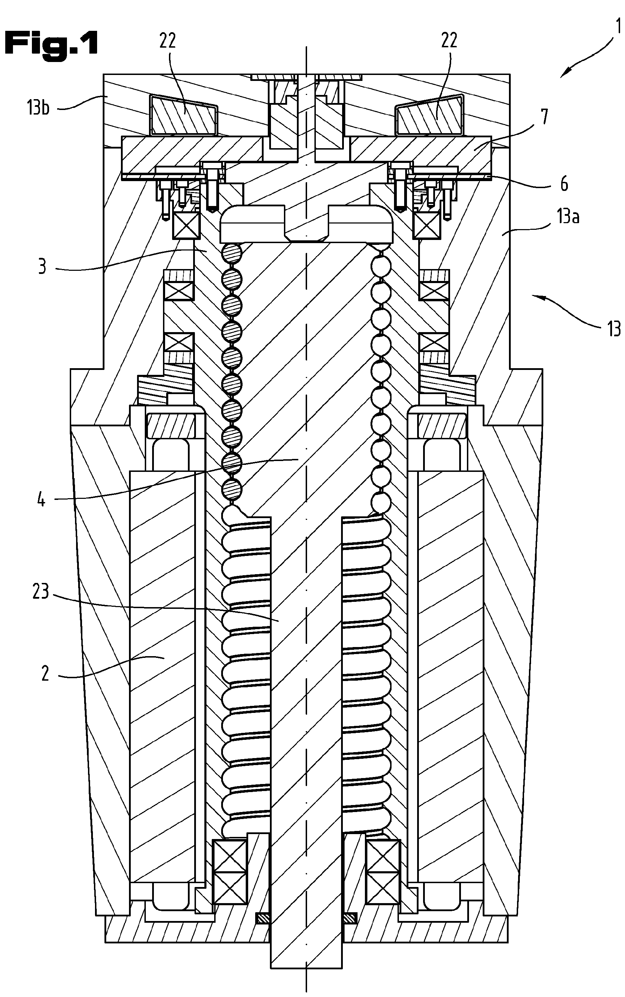

Fig. 1 zeigt einen elektromechanischen Antrieb 1 umfassend einen Motor 2 und einen Rotationsteil 3, der durch den Motor 2 um eine Rotationsachse 4 in Rotation versetzbar ist. Der Motor weist einen Stator 2a, der an der Innenseite des Gehäuses 13 gelagert ist (z.B. in Form von Wicklungen), und einen Rotor 2b, der an dem Rotationsteil 3 angeordnet ist (z.B. in Form von Permanentmagneten), auf.

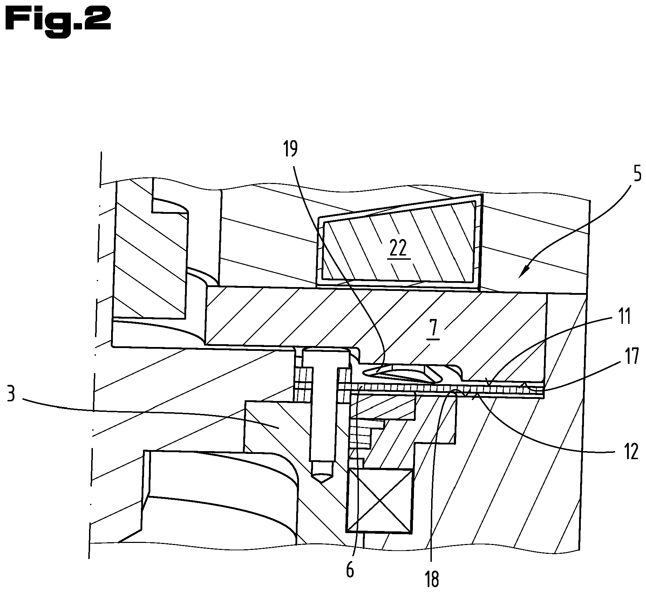

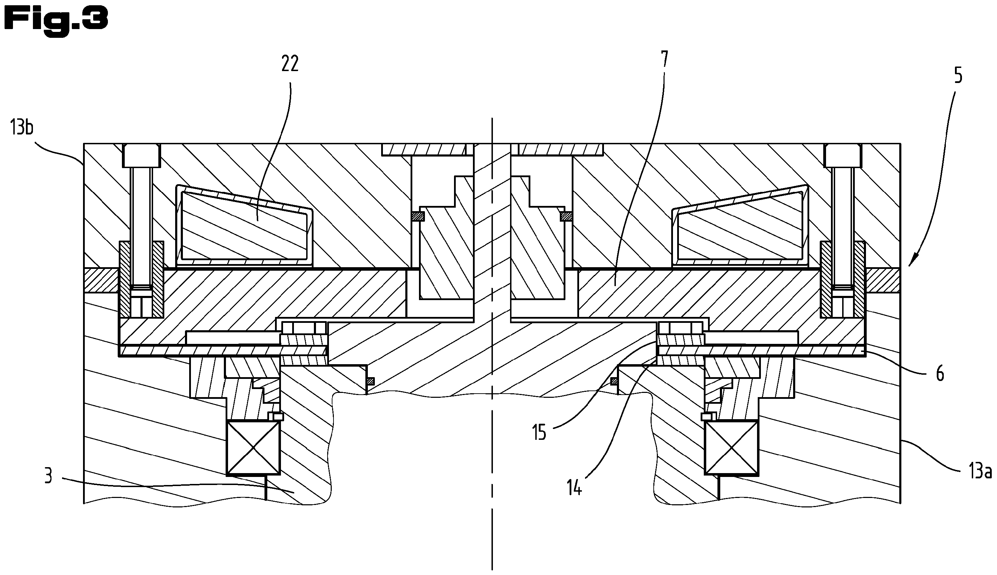

Der elektromechanische Antrieb 1 umfasst weiters eine zwischen einer Bremsstellung und einer gelösten Stellung betätigbare Bremseinrichtung 5. Die Bremseinrichtung 5 weist eine mit dem Rotationsteil 3 mitdrehende Bremsscheibe 6 und ein in axialer Richtung verstellbares Bremselement 7, welches in der Bremsstellung auf die Bremsscheibe 6 einwirkt, auf (siehe auch Fig. 2 und 3).

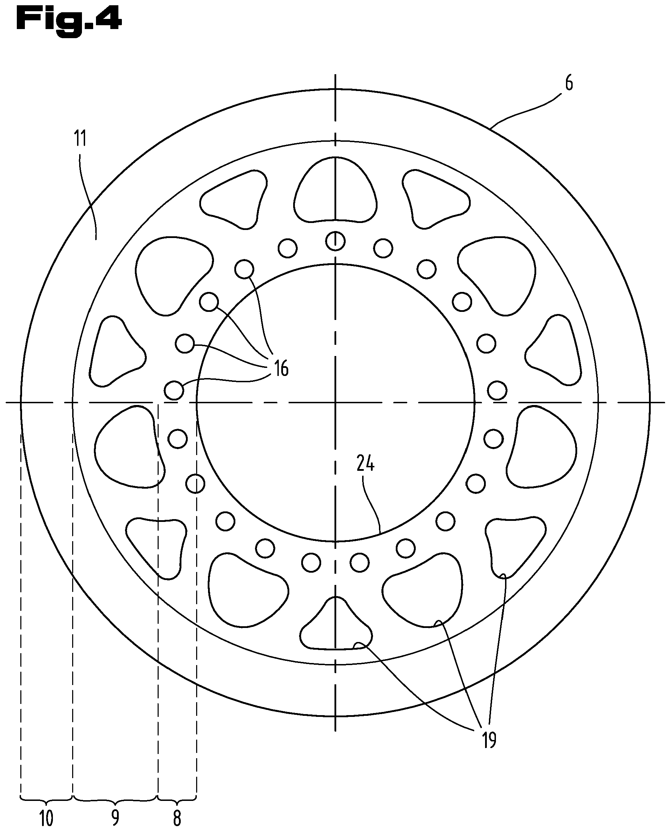

Aus Fig. 4 ist ersichtlich, dass die Bremsscheibe 6
- einen inneren Bereich 8,
- einen ringförmig um die Rotationsachse 4 verlaufenden Reibflächenbe-reich 10 mit einer ersten Reibfläche 11, die an einer ersten Seite der Bremsscheibe 6 ausgebildet ist, und
- einen Zwischenbereich 9, der zwischen dem Reibflächenbereich 10 und dem inneren Bereich 8 um die Rotationsachse 4 verläuft,
aufweisen kann.

An dem Bremselement 7 ist eine erste Gegenfläche 17 ausgebildet ist, die der ersten Reibfläche 11 zugewandt ist und in der Bremsstellung mit der ersten Reibfläche 11 zusammenwirkt.

Bevorzugt sind der Motor 2 und die Bremseinrichtung 5 in einem gemeinsamen Gehäuse 13 untergebracht.

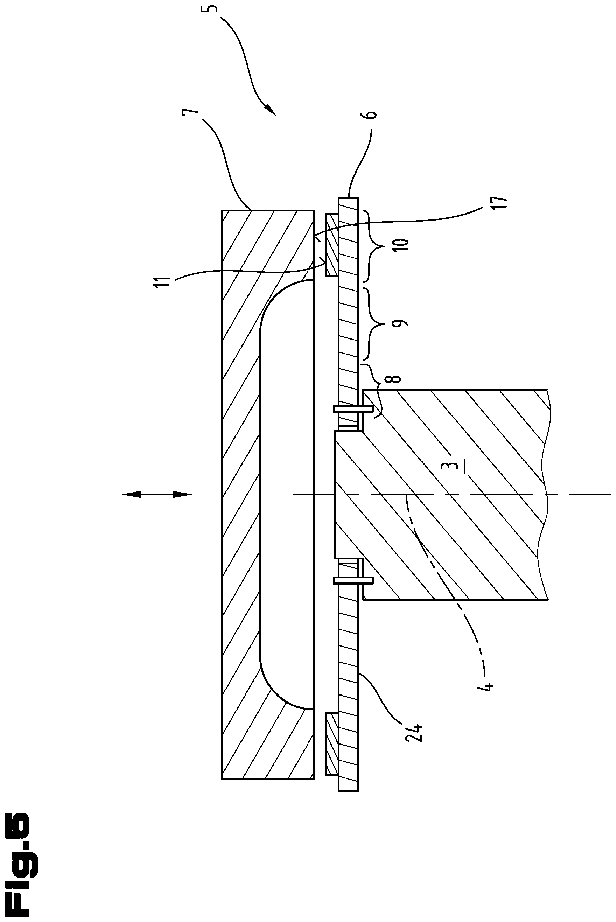

In der dargestellten bevorzugten Ausführungsform ist der Zwischenbereich 9 der Bremsscheibe 6 - sowohl in der gelösten Stellung als auch in der Bremsstellung - kontaktfrei zu dem Bremselement 7. In der Bremsstellung ist der Kontakt des Bremselementes 7 mit der Bremsscheibe 6 auf die erste Reibfläche 11 beschränkt (siehe Fig. 2, 7 und 9). Wie z.B. auch aus Fig. 5 hervorgeht können dabei die an die erste Gegenfläche 17 angrenzenden Bereiche des Bremselementes 7 hinter die Gegenfläche 17 zurückversetzt sein.

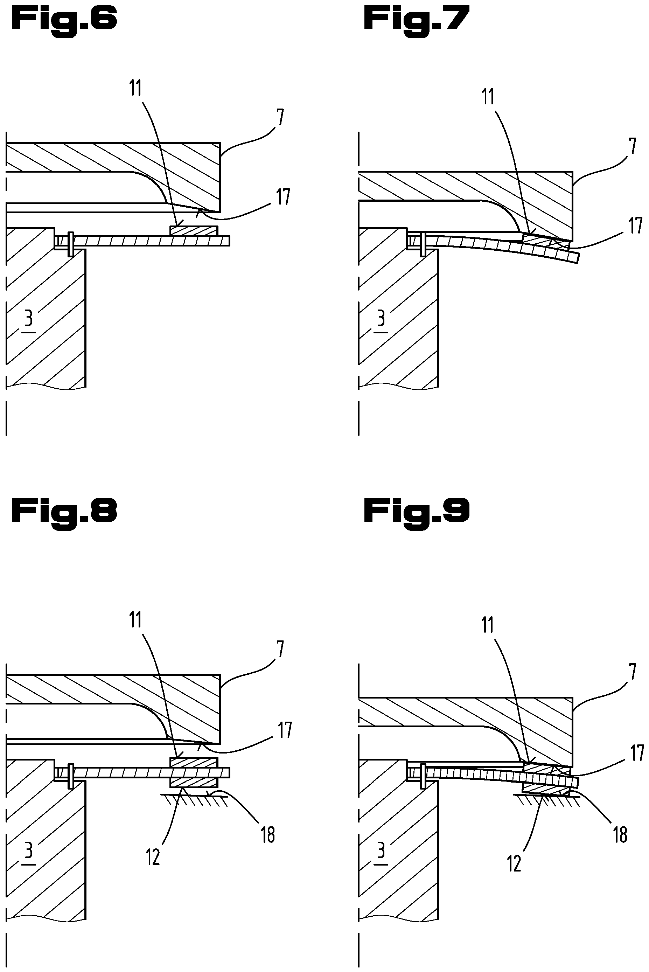

In der in Fig. 4 dargestellten bevorzugten Ausführungsform der Bremsscheibe 6 ist der Zwischenbereich 9 ein Verformungsbereich, der durch die Wirkung des Bremselementes 7 auf die Bremsscheibe 6 in axialer Richtung elastisch verformbar ist (siehe Fig. 7 und 9).

Im Verformungsbereich können - wie in Fig. 4 gezeigt - Ausschnitte 19, vorzugsweise in Form von Durchbrechungen, und/oder Materialschwächungen ausgebildet sein. Es ist bevorzugt, wenn im Verformungsbereich die Gesamtfläche der Ausschnitte 19 zumindest so groß ist wie die Gesamtfläche, die vom verbleibenden Material eingenommen wird.

Während die Ausführungsformen gemäß Fig. 5-7 nur eine erste Reib- und Gegenfläche aufweisen, zeigen die Varianten der Fig. 1-3 sowie Fig. 8 und 9, dass der Reibflächenbereich 10 eine zweite Reibfläche 12, die an der zweiten, der ersten Seite gegenüberliegenden Seite der Bremsscheibe 6 ausgebildet ist, aufweisen kann. Der Reibflächenbereich 10 der Bremsscheibe 6 ist zwischen der ersten Gegenfläche 17 und einer zweiten Gegenfläche 18, die der zweiten Reibfläche 12 zugewandt ist und in der Bremsstellung mit der zweiten Reibfläche 12 zusammenwirkt, angeordnet.

Die Bremsscheibe 6 weist einen scheibenförmigen Grundkörper 24 auf. Die erste Reibfläche 11 bzw. die zweite Reibfläche 12 werden jeweils durch einen vorzugsweise ringförmigen Bremsbelag gebildet, welcher auf dem Grundkörper 24 aufgebracht ist und/oder in axialer Richtung über den Grundkörper 26 vorsteht (Fig. 5-9).

Die erste Gegenfläche 17 und die zweite Gegenfläche 18 sind jeweils ringförmig ausgebildet. Denkbar wären auch mehrere unterbrochene, z.B. segmentartig angeordnete Gegenflächenbereiche.

Wie aus Fig. 4 deutlich zu sehen ist, ist der Reibflächenbereich 10 bevorzugt in der Peripherie der Bremsscheibe 6 angeordnet. Dabei kann die erste Reibfläche 11 und/oder die zweite Reibfläche 12 bis an den Außenrand der Bremsscheibe 6 reichen. Die Differenz zwischen dem Außenradius und dem Innenradius des Reibflächenbereiches 10 beträgt bevorzugt höchstens 1/3, vorzugsweise höchstens 1/4, des Außenradius der Bremsscheibe 6.

Fig. 1 und 3 zeigen, dass der elektromechanische Antrieb 1 ein (mehrteiliges) Gehäuse 13 aufweist. Die zweite Gegenfläche 18 kann dabei an einem Gehäuseteil 13a oder an einem mit dem Gehäuseteil 13a fest verbundenen Element ausgebildet sein. Auf diese Weise kann das Bremsmoment und die dabei entstehende Reibungswärme direkt in das Gehäuse eingeleitet werden.

In der in Fig. 4 dargestellten Ausführungsform weist der innere Bereich 8 der Bremsscheibe 6 mehrere - hier ringförmig angeordnete - Befestigungsschnittstellen 16, vorzugsweise in Form von Löchern, zur Befestigung der Bremsscheibe 6 an den Rotationsteil 3 auf. Dabei ist vorzugsweise die Anzahl der Befestigungsschnittstellen 16 größer als 10 und/oder größer als die Anzahl der Ausschnitte 19 im Verformungsbereich. Durch eine hohe Anzahl an Befestigungsschnittstellen kann eine besonders genaue Einstellung der Bremsscheibe relativ zu den Gegenflächen erfolgen.

In den Varianten der Fig. 6-9 weichen - in der gelösten Stellung der Bremseinrichtung 5 - die erste Reibfläche 11 und die erste Gegenfläche 17 von einer parallelen Ausrichtung ab. Ebenso könnte die zweite Reibfläche 12 und die zweite Gegenfläche 18 von einer parallelen Ausrichtung abweichen.

Bevorzugter Weise nimmt der Abstand zwischen der ersten Reibfläche 11 und der ersten Gegenfläche 17 in radialer Richtung ab, wobei vorzugsweise dieser Abstand an dem radial äußeren Rand der ersten Reibfläche 11 um höchstens 1mm, bevorzugt um höchstens 0,2mm, kleiner ist als an dem radial inneren Rand der ersten Reibfläche 11.

Ebenso kann der Abstand zwischen der zweiten Reibfläche 12 und der zweiten Gegenfläche 18 in radialer Richtung abnehmen, wobei vorzugsweise dieser Abstand an dem radial äußeren Rand der zweiten Reibfläche 12 um höchstens 1mm, bevorzugt um höchstens 0,2mm, kleiner ist als an dem radial inneren Rand der zweiten Reibfläche 12.

Die Reibflächen und Gegenflächen können zueinander geneigt sein. Auch können die Reibflächen und Gegenflächen in radialer Richtung einen gekrümmten Verlauf aufweisen.

Wie insbesondere aus den Figuren 1-3 hervorgeht kann der innere Bereich 8 der Bremsscheibe 6 an dem Rotationsteil 3 axial fixiert sein. In den dargestellten Ausführungsformen ist innere Bereich 8 der Bremsscheibe 6 mit dem Rotationsteil 3 überhaupt starr verbunden. Dies erfolgt hier mittels Schrauben, die durch die Löcher (Befestigungsschnittstellen 16; siehe Fig. 4) ragen und die Bremsscheibe gegen den Rotationsteil 3 drücken.

In der Ausführungsform der Fig. 3 ist zu sehen, dass zwischen dem inneren Bereich 8 der Bremsscheibe 6 und dem Rotationsteil 3 ein erster Distanzring 14 angeordnet ist. Der innere Bereich 8 der Bremsscheibe 6 ist zudem zwischen dem ersten Distanzring 14 und einem zweiten Distanzring 15 eingezwängt ist. Dies erfolgt mit denselben - weiter oben erwähnten - Schrauben, die die Bremsscheibe 7 mit dem Rotationsteil 3 fest verbinden.

In der dargestellten bevorzugten Variante ist der elektromechanische Antrieb 1 ein Spindelantrieb, wobei der Rotationsteil 3, mit dem die Bremsscheibe 6 verbunden ist, in Form einer Gewindemutter ausgebildet ist, welche mit der Spindel 23 des Spindelantriebs zusammenwirkt. Das untere Ende der Spindel 23 bewegt sich - bei Betätigung des Motors und Rotation der Gewindemutter (Rotationsteil 3) linear entlang der Rotationsachse 4 nach unten bzw. nach oben (Fig. 1).

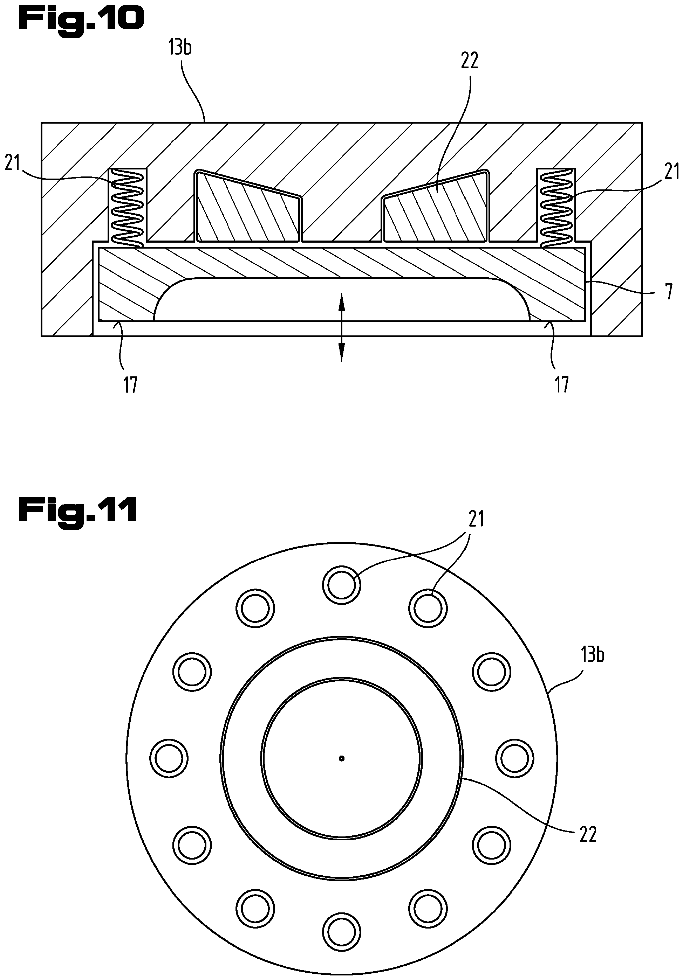

Bevorzugt ist das Bremselement 7 in Richtung Bremsstellung vorgespannt. Fig. 10 und 11 zeigen schließlich, dass das Bremselement 7 in Richtung Bremsstellung durch eine Vielzahl von Federn 21, die ringförmig und vorzugsweise mit der ersten Gegenfläche 17 überlappend angeordnet sind, vorgespannt ist.

Die Federn 21 können dabei in einem abnehmbaren Gehäuseteil 13b (z.B. in Form eines Deckels bzw. einer stirnseitigen Abdeckung) des elektromechanischen Antriebes 1 eingesetzt sein.

In den Fig. 1-3 und 10 ist zu sehen, dass die Bremseinrichtung 5 einen Aktor 22, vorzugsweise in Form eines Elektromagneten, umfasst, durch den das Bremselement 6 in die gelöste Stellung und/oder in die Bremsstellung bringbar ist. Der Aktor 22 kann - ebenso wie die federn 21 - in einem abnehmbaren Gehäuseteil 13b des elektromechanischen Antriebes 1 eingesetzt sein.

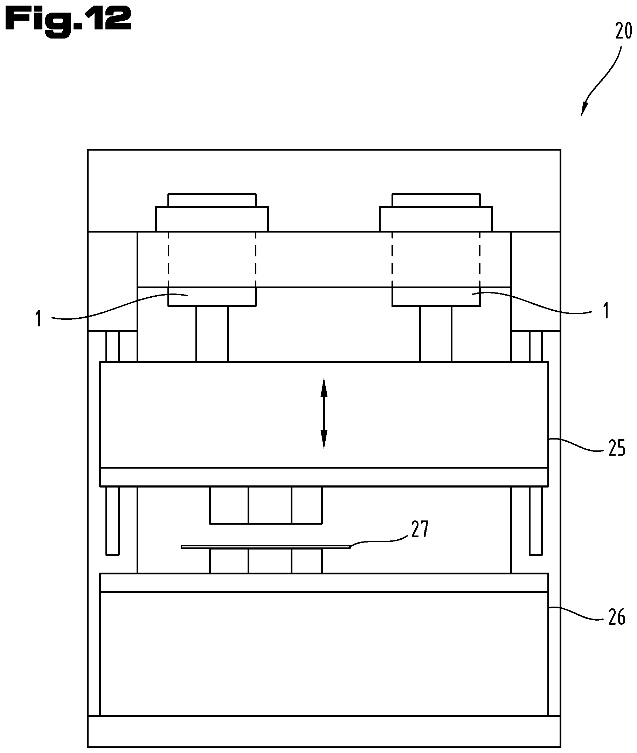

Fig. 12 zeigt schließlich eine Umformmaschine 20 in Form einer Biegepresse, mit zumindest einem Antrieb für die Arbeitsbewegung (eines Umformwerkzeuges), insbesondere Pressantrieb. Der Antrieb bzw. die Antriebe sind dabei als elektromechanische(r) Antrieb(e) 1 gemäß Erfindung ausgebildet. Eine solche Umformmaschine kann einen ersten (z.B. oberen) Werkzeugträger und einen zweiten (z.B. unteren) Werkzeugträger umfassen, deren Relativbewegung die Arbeitsbewegung ist. Der oben beschriebene elektromechanische Antrieb eignet sich besonders gut für den Einsatz in einer Biegemaschine, da die vorgeschlagene Bremseinrichtung besonders schnell reagiert und damit insbesondere das Bedienpersonal zuverlässig geschützt (insbesondere in Fällen, in denen eine Abschaltung oder ein Stopp/Verlangsamung der Arbeitsbewegung für die Sicherheit relevant ist) aber auch Werkstücke vor falschen bzw. fehlerbehafteten Bearbeitungsroutinen "geschützt" werden.

### Bezugszeichenaufstellung

- 1: elektromechanischer Antrieb
- 2: Motor
- 2a, 2b: Stator, Rotor
- 3: Rotationsteil
- 4: Rotationsachse
- 5: Bremseinrichtung
- 6: Bremsscheibe
- 7: Bremselement
- 8: innerer Bereich
- 9: Zwischenbereich
- 10: Reibflächenbereich
- 11: erste Reibfläche
- 12: zweite Reibfläche
- 13: Gehäuse
- 13a: Gehäuseteil
- 13b: Gehäuseteil
- 14: erster Distanzring
- 15: zweiter Distanzring
- 16: Befestigungsschnittstelle
- 17: erste Gegenfläche
- 18: zweite Gegenfläche
- 19: Ausschnitte
- 20: Umformmaschine
- 21: Feder
- 22: Aktor
- 23: Spindel
- 24: Grundkörper
- 25: erste Werkzeughalterung
- 26: zweite Werkzeughalterung
- 27: Werkstück

## Patentansprüche

1. Elektromechanischer Antrieb (1) umfassend
- einen Motor (2),
- einen Rotationsteil (3), der durch den Motor (2) um eine Rotationsachse (4) in Rotation versetzbar ist, und
- eine zwischen einer Bremsstellung und einer gelösten Stellung betätigbare Bremseinrichtung (5),
wobei die Bremseinrichtung (5) eine mit dem Rotationsteil (3) mitdrehende Bremsscheibe (6) und ein in axialer Richtung verstellbares Bremselement (7), welches in der Bremsstellung auf die Bremsscheibe (6) einwirkt, aufweist,
wobei die Bremsscheibe (6)
- einen inneren Bereich (8),
- einen ringförmig um die Rotationsachse (4) verlaufenden Reibflächenbereich (10) mit einer ersten Reibfläche (11), die an einer ersten Seite der Bremsscheibe (6) ausgebildet ist, und einer zweiten Reibfläche (12), die an der zweiten, der ersten Seite gegenüberliegenden Seite der Bremsscheibe (6) ausgebildet ist, und
- einen Zwischenbereich (9), der zwischen dem Reibflächenbereich (10) und dem inneren Bereich (8) um die Rotationsachse (4) verläuft,
aufweist, und wobei an dem Bremselement (7) eine erste Gegenfläche (17) ausgebildet ist, die der ersten Reibfläche (11) zugewandt ist und in der Bremsstellung mit der ersten Reibfläche (11) zusammenwirkt,
und wobei der Reibflächenbereich (10) der Bremsscheibe (6) zwischen der ersten Gegenfläche (17) und einer zweiten Gegenfläche (18), die der zweiten Reibfläche (12) zugewandt ist und in der Bremsstellung mit der zweiten Reibfläche (12) zusammenwirkt, angeordnet ist, **dadurch gekennzeichnet, dass** der Zwischenbereich (9) ein Verformungsbereich ist, der durch die Wirkung des Bremselementes (7) auf die Bremsscheibe (6) in axialer Richtung elastisch verformbar ist, und dass in der gelösten Stellung der Bremseinrichtung (5) die erste Reibfläche (11) und die erste Gegenfläche (17) von einer parallelen Ausrichtung abweichen und/oder zueinander geneigt sind und/oder die zweite Reibfläche (12) und die zweite Gegenfläche (18) von einer parallelen Ausrichtung abweichen und/oder zueinander geneigt sind.

2. Elektromechanischer Antrieb nach Anspruch 1, **dadurch gekennzeichnet, dass** der Zwischenbereich (9) der Bremsscheibe (6) - sowohl in der gelösten Stellung als auch in der Bremsstellung - kontaktfrei zu dem Bremselement (7) ist und/oder dass in der Bremsstellung der Kontakt des Bremselementes (7) mit der Bremsscheibe (6) auf die erste Reibfläche (11) beschränkt ist.

3. Elektromechanischer Antrieb nach einem der vorhergehenden Ansprüche, **dadurch gekennzeichnet, dass** im Verformungsbereich Ausschnitte (19), vorzugsweise in Form von Durchbrechungen, und/oder Materialschwächungen ausgebildet sind.

4. Elektromechanischer Antrieb nach Anspruch 3, **dadurch gekennzeichnet, dass** im Verformungsbereich die Gesamtfläche der Ausschnitte (19) zumindest so groß ist wie die Gesamtfläche, die vom verbleibenden Material eingenommen wird.

5. Elektromechanischer Antrieb nach einem der vorhergehenden Ansprüche, **dadurch gekennzeichnet, dass** die erste Gegenfläche (17) ringförmig ist und/oder dass die zweite Gegenfläche (18) ringförmig ist.

6. Elektromechanischer Antrieb nach einem der vorhergehenden Ansprüche, **dadurch gekennzeichnet, dass** der Reibflächenbereich (10) in der Peripherie der Bremsscheibe (6) angeordnet ist, wobei vorzugsweise die erste Reibfläche (11) und/oder die zweite Reibfläche (12) bis an den Außenrand der Bremsscheibe (6) reichen.

7. Elektromechanischer Antrieb nach einem der vorhergehenden Ansprüche, **dadurch gekennzeichnet, dass** die Differenz zwischen dem Außenradius und dem Innenradius des Reibflächenbereiches (10) höchstens 1/3, vorzugsweise höchstens 1/4, des Außenradius der Bremsscheibe (6) beträgt.

8. Elektromechanischer Antrieb nach einem der vorhergehenden Ansprüche, **dadurch gekennzeichnet, dass** der elektromechanische Antrieb (1) ein Gehäuse (13) aufweist und dass die zweite Gegenfläche (18) an einem Gehäuseteil (13a) oder an einem mit dem Gehäuseteil (13a) fest verbundenen Element ausgebildet ist.

9. Elektromechanischer Antrieb nach einem der vorhergehenden Ansprüche, **dadurch gekennzeichnet, dass** der innere Bereich (8) der Bremsscheibe (6) zumindest eine, vorzugsweise mehrere - vorzugsweise ringförmig angeordnete - Befestigungsschnittstellen (16), vorzugsweise in Form von Löchern, zur Befestigung der Bremsscheibe (6) an den Rotationsteil (3) aufweist, wobei vorzugsweise die Anzahl der Befestigungsschnittstellen (16) größer als 10 und/oder größer als die Anzahl der Ausschnitte (19) im Verformungsbereich ist.

10. Elektromechanischer Antrieb nach einem der vorhergehenden Ansprüche, **dadurch gekennzeichnet,**
**dass** der Abstand zwischen der ersten Reibfläche (11) und der ersten Gegenfläche (17) in radialer Richtung abnimmt, wobei vorzugsweise dieser Abstand an dem radial äußeren Rand der ersten Reibfläche (11) um höchstens 1mm, bevorzugt um höchstens 0,2mm, kleiner ist als an dem radial inneren Rand der ersten Reibfläche (11),
und/oder dass der Abstand zwischen der zweiten Reibfläche (12) und der zweiten Gegenfläche (18) in radialer Richtung abnimmt, wobei vorzugsweise dieser Abstand an dem radial äußeren Rand der zweiten Reibfläche (12) um höchstens 1mm, bevorzugt um höchstens 0,2mm, kleiner ist als an dem radial inneren Rand der zweiten Reibfläche (12).

11. Elektromechanischer Antrieb nach einem der vorhergehenden Ansprüche, **dadurch gekennzeichnet, dass** die erste Reibfläche (11) und/oder die erste Gegenfläche (17) in radialer Richtung einen gekrümmten Verlauf aufweisen
und/oder dass die zweite Reibfläche (12) und/oder die zweite Gegenfläche (18) in radialer Richtung einen gekrümmten Verlauf aufweisen.

12. Elektromechanischer Antrieb nach einem der vorhergehenden Ansprüche, **dadurch gekennzeichnet, dass** der innere Bereich (8) der Bremsscheibe (6) an dem Rotationsteil (3) axial fixiert ist und/oder dass der innere Bereich (8) der Bremsscheibe (6) mit dem Rotationsteil (3) starr verbunden ist, vorzugsweise über Schrauben.

13. Elektromechanischer Antrieb nach einem der vorhergehenden Ansprüche, **dadurch gekennzeichnet, dass** zwischen dem inneren Bereich (8) der Bremsscheibe (6) und
dem Rotationsteil (3) ein erster Distanzring (14) angeordnet ist, wobei vorzugsweise der innere Bereich (8) der Bremsscheibe (6) zwischen dem ersten Distanzring (14) und einem zweiten Distanzring (15) eingezwängt ist, vorzugsweise mittels Schrauben.

14. Elektromechanischer Antrieb nach einem der vorhergehenden Ansprüche, **dadurch gekennzeichnet, dass** der elektromechanische Antrieb (1) ein Spindelantrieb ist, wobei der Rotationsteil (3), mit dem die Bremsscheibe (6) verbunden ist, in Form einer Gewindemutter ausgebildet ist, welche mit der Spindel (23) des Spindelantriebs zusammenwirkt.

15. Elektromechanischer Antrieb nach einem der vorhergehenden Ansprüche, **dadurch gekennzeichnet, dass** die Bremsscheibe (6) einen scheibenförmigen Grundkörper (24) aufweist und dass die erste Reibfläche (11) und/oder die zweite Reibfläche (12) durch einen vorzugsweise ringförmigen Bremsbelag gebildet wird, welcher auf dem Grundkörper (24) aufgebracht ist und/oder in axialer Richtung über den Grundkörper (26) vorsteht.

16. Elektromechanischer Antrieb nach einem der vorhergehenden Ansprüche, **dadurch gekennzeichnet, dass** das Bremselement (7) in Richtung Bremsstellung vorgespannt ist.

17. Elektromechanischer Antrieb nach Anspruch 16, **dadurch gekennzeichnet, dass** das Bremselement (7) in Richtung Bremsstellung durch eine Vielzahl von Federn (21), die ringförmig und vorzugsweise mit der ersten Gegenfläche (17) überlappend angeordnet sind, vorgespannt ist.

18. Elektromechanischer Antrieb nach Anspruch 17, **dadurch gekennzeichnet, dass** die Federn (21) in einem abnehmbaren Gehäuseteil (13b) des elektromechanischen Antriebes (1) eingesetzt sind.

19. Elektromechanischer Antrieb nach einem der vorhergehenden Ansprüche, **dadurch gekennzeichnet, dass** die Bremseinrichtung (5) zumindest einen Aktor (22), vorzugsweise in Form eines Elektromagneten, umfasst, durch den das Bremselement (6) in die gelöste Stellung und/oder in die Bremsstellung bringbar ist, wobei vorzugsweise der Aktor (22) in einem abnehmbaren Gehäuseteil (13b) des elektromechanischen Antriebes (1) eingesetzt ist.

20. Elektromechanischer Antrieb nach einem der vorhergehenden Ansprüche, **dadurch gekennzeichnet, dass** der Motor (2) und die Bremseinrichtung (5) in einem gemeinsamen Gehäuse (13) untergebracht sind.

21. Umformmaschine (20), insbesondere Biegemaschine, vorzugsweise eine Biegepresse, mit zumindest einem Antrieb für die Arbeitsbewegung, insbesondere Pressantrieb, **dadurch gekennzeichnet, dass** der zumindest eine Antrieb ein elektromechanischer Antrieb (1) nach einem der vorhergehenden Ansprüche ist.

## Claims

1. An electromechanical drive (1) comprising
- a motor (2),
- a rotational part (3), said rotational part being rotatable by the motor (2) about a rotational axis (4), and
- a braking device (5) that can be actuated between a braking position and a released position,
the braking device (5) having a brake disc (6) that rotates with the rotational part (3) and a braking element (7) that can be adjusted in the axial direction and acts on the brake disc (6) in the braking position,
wherein the brake disc (6) has
- an inner area (8),
- a friction surface area (10) extending annularly around the rotational axis (4) with a first friction surface (11) formed on a first side of the brake disc (6), and a second friction surface (12) formed on a second side of the brake disc (6) opposite the first side, and
- an intermediate area (9) extending between the friction surface area (10) and the inner area (8) around the rotational axis (4),
and wherein a first mating surface (17) is formed on the braking element (7), which mating surface faces the first friction surface (11) and interacts with the first friction surface (11) in the braking position,
and wherein the friction surface (10) of the brake disc (6) is arranged between the first mating surface (17) and a second mating surface (18) which faces to the second friction surface (12) and cooperates with the second friction surface (12) in the braking position, **characterised in that** the intermediate area (9) is a deformation area that is elastically deformable in the axial direction by the action of the braking element (7) on the brake disc (6), and that, in the released position of the braking device (5), the first friction surface (11) and the first mating surface (17) deviate from a parallel alignment and/or are inclined towards each other and/or the second friction surface (12) and the second mating surface (18) deviate from a parallel alignment and/or are inclined towards each other.

2. The electromechanical drive according to claim 1, **characterised in that** the intermediate region (9) of the brake disc (6), both in the released position and in the braking position, is free of contact with the braking element (7) and/or that in the braking position the contact of the braking element (7) with the brake disc (6) is limited to the first friction surface (11).

3. The electromechanical drive according to one of the preceding claims, **characterised in that** cut-outs (19), preferably in the form of perforations, and/or material weakenings are formed in the deformation area.

4. The electromechanical drive according to claim 3, **characterised in that** in the deformation area, the total area of the cut-outs (19) is at least as large as the total area occupied by the remaining material.

5. The electromechanical drive according to one of the preceding claims, **characterised in that** the first mating surface (17) is annular and/or that the second mating surface (18) is annular.

6. The electromechanical drive according to one of the preceding claims, **characterised in that** the friction surface area (10) is arranged in the periphery of the brake disc (6), wherein preferably the first friction surface (11) and/or the second friction surface (12) extend to the outer edge of the brake disc (6).

7. The electromechanical drive according to one of the preceding claims, **characterised in that** the difference between the outer radius and the inner radius of the friction surface area (10) is at most 1/3, preferably at most 1/4, of the outer radius of the brake disc (6).

8. The electromechanical drive according to one of the preceding claims, **characterised in that** the electromechanical drive (1) has a housing (13) and that the second mating surface (18) is formed on a housing part (13a) or on an element firmly connected to the housing part (13a).

9. The electromechanical drive according to one of the preceding claims, **characterised in that** the inner region (8) of the brake disc (6) has at least one, preferably several, preferably annularly arranged, attachment interfaces (16), preferably in the form of holes, for attaching the brake disc (6) to the rotational part (3), wherein preferably the number of attaching interfaces (16) is greater than 10 and/or greater than the number of cut-outs (19) in the deformation area.

10. The electromechanical drive according to one of the preceding claims, **characterised in that**
the distance between the first friction surface (11) and the first mating surface (17) decreases in the radial direction, wherein preferably this distance is smaller at the radially outer edge of the first friction surface (11) by at most 1 mm, preferably by at most 0.2 mm, than at the radially inner edge of the first friction surface (11),
and/or the distance between the second friction surface (12) and the second mating surface (18) decreases in the radial direction, wherein preferably this distance is smaller at the radially outer edge of the second friction surface (12) by at most 1 mm, preferably by at most 0.2 mm, than at the radially inner edge of the second friction surface (12).

11. The electromechanical drive according to one of the preceding claims, **characterised in that** the first friction surface (11) and/or the first mating surface (17) have a curved shape in the radial direction
and/or that the second friction surface (12) and/or the second mating surface (18) have a curved shape in the radial direction.

12. The electromechanical drive according to one of the preceding claims, **characterised in that** the inner area (8) of the brake disc (6) is axially fixed to the rotational part (3) and/or that the inner area (8) of the brake disc (6) is rigidly connected to the rotational part (3), preferably by screws.

13. The electromechanical drive according to one of the preceding claims, **characterised in that** a first spacer ring (14) is arranged between the inner region (8) of the brake disc (6) and the rotational part (3), wherein preferably the inner region (8) of the brake disc (6) is constrained between the first spacer ring (14) and a second spacer ring (15), preferably by screws.

14. The electromechanical drive according to one of the preceding claims, **characterised in that** the electromechanical drive (1) is a spindle drive, wherein the rotational part (3) to which the brake disc (6) is connected is configured as a threaded nut which cooperates with the spindle (23) of the spindle drive.

15. The electromechanical drive according to one of the preceding claims, **characterised in that** the brake disc (6) has a disc-shaped base body (24) and that the first friction surface (11) and/or the second friction surface (12) are formed by a preferably annular brake lining which is applied to the base body (24) and/or projects in the axial direction beyond the base body (26).

16. The electromechanical drive according to one of the preceding claims, **characterised in that** the brake element (7) is biased towards the braking position.

17. The electromechanical drive according to claim 16, **characterised in that** the braking element (7) is biased towards the braking position by a plurality of springs (21) arranged in an annular manner and preferably overlapping with the first mating surface (17).

18. The electromechanical drive according to claim 17, **characterised in that** the springs (21) are inserted in a removable housing part (13b) of the electromechanical drive (1).

19. The electromechanical drive according to one of the preceding claims, **characterised in that** the braking device (5) comprises at least one actuator (22), preferably in the form of an electromagnet, by means of which the braking element (6) can be brought into the released position and/or into the braking position, wherein preferably the actuator (22) is inserted in a removable housing part (13b) of the electromechanical drive (1).

20. The electromechanical drive according to one of the preceding claims, **characterised in that** the motor (2) and the braking device (5) are housed in a common housing (13).

21. A forming machine (20), in particular a bending machine, preferably a bending press, with at least one drive for the working movement, in particular a press drive, **characterised in that** the at least one drive is an electromechanical drive (1) according to one of the preceding claims.

## Revendications

1. Entraînement électromécanique (1) comprenant
- un moteur (2),
- une partie rotative (3) qui peut être mise en rotation par le moteur (2) autour d'un axe de rotation (4) et
- un dispositif de freinage (5) pouvant être actionné entre une position de freinage et une position desserrée,
dans lequel le dispositif de freinage (5) comprend un disque de freinage (6) tournant avec la partie rotative (3) et un élément de freinage (7) pouvant être déplacé dans une direction axiale, qui agit, dans la position de freinage, sur le disque de freinage (6), dans lequel le disque de freinage (6) comprend
- une partie interne (8),
- une partie à surface de friction (10) s'étendant de manière annulaire autour de l'axe de rotation (4), comprenant une première surface de friction (11) qui est réalisée sur une première face du disque de freinage (6) et une deuxième surface de friction (12), qui est réalisée sur la deuxième face, opposée à la première face, du disque de freinage (6) et
- une partie intermédiaire (9), qui s'étend entre la partie à surface de friction (10) et la partie interne (8) autour de l'axe de rotation (4),
et dans lequel, sur l'élément de freinage (7), est réalisée une contre-surface (17) qui est orientée vers la première surface de friction (11) et qui interagit, dans la position de freinage, avec la première surface de friction (11),
et dans lequel la partie à surface de friction (10) du disque de freinage (6) est disposée entre la première contre-surface (17) et une deuxième contre-surface (18), qui est orientée vers la deuxième surface de friction (12) et qui interagit, dans la position de freinage, avec la deuxième surface de friction (12),
**caractérisé en ce que** la partie intermédiaire (9) est une partie de déformation qui peut être déformée élastiquement dans la direction axiale grâce à l'action de l'élément de freinage (7) sur le disque de freinage (6) et **en ce que**, dans la position desserrée du dispositif de freinage (5), la première surface de friction (11) et la première contre-surface (17) s'écartent d'une orientation parallèle et/ou sont inclinées l'une par rapport à l'autre et/ou la deuxième surface de friction (12) et la deuxième contre-surface (18) s'écartent d'une orientation parallèle et/ou sont inclinées l'une par rapport à l'autre.

2. Entraînement électromécanique selon la revendication 1, **caractérisé en ce que** la partie intermédiaire (9) du disque de freinage (6) - aussi bien dans la position desserrée que dans la position de freinage - est sans contact avec l'élément de freinage (7) et/ou **en ce que**, dans la position de freinage, le contact de l'élément de freinage (7) avec le disque de freinage (6) est limité à la première surface de friction (11).

3. Entraînement électromécanique selon l'une des revendications précédentes, **caractérisé en ce que**, dans la partie de déformation, sont réalisées des découpes (19), de préférence sous la forme de perçages et/ou d'affaiblissements du matériau.

4. Entraînement électromécanique selon la revendication 3, **caractérisé en ce que**, dans la partie de déformation, la surface totale des découpes (19) est au moins aussi grande que la surface totale du matériau restant.

5. Entraînement électromécanique selon l'une des revendications précédentes, **caractérisé en ce que** la première contre-surface (17) est annulaire et/ou **en ce que** la deuxième contre-surface (18) est annulaire.

6. Entraînement électromécanique selon l'une des revendications précédentes, **caractérisé en ce que** la partie de surface de friction (10) est disposée à la périphérie du disque de freinage (6), dans lequel, de préférence, la première surface de friction (11) et/ou la deuxième surface de friction (12) arrivent jusqu'au bord externe du disque de freinage (6).

7. Entraînement électromécanique selon l'une des revendications précédentes, **caractérisé en ce que** la différence entre le rayon externe et le rayon interne de la partie de surface de friction (10) représente au maximum 1/3, de préférence au maximum 1/4 du rayon externe du disque de freinage (6).

8. Entraînement électromécanique selon l'une des revendications précédentes, **caractérisé en ce que** l'entraînement électromécanique (1) comprend un boîtier (13) et **en ce que** la deuxième contre-surface (18) est réalisée sur une partie du boîtier (13a) ou sur un élément relié fermement à la partie du boîtier (13a).

9. Entraînement électromécanique selon l'une des revendications précédentes, **caractérisé en ce que** la partie interne (8) du disque de freinage (6) comprend au moins une, de préférence plusieurs interfaces de fixation (16) - disposées de préférence de manière annulaire - de préférence sous la forme de trous, pour la fixation du disque de freinage (6) sur la partie rotative (3), dans lequel, de préférence, le nombre d'interfaces de fixation (16) est supérieur à 10 et/ou supérieur au nombre de découpes (19) dans la partie de déformation.

10. Entraînement électromécanique selon l'une des revendications précédentes, **caractérisé en ce que**
la distance entre la première surface de friction (11) et la première contre-surface (17) diminue dans la direction radiale, dans lequel, préférence, cette distance est inférieure, sur le bord radialement externe de la première surface de friction (11), de maximum 1 mm, de préférence de maximum 0,2 mm, à la distance sur le bord radialement interne de la première surface de friction (11),
et/ou **en ce que** la distance entre la deuxième surface de friction (12) et la deuxième contre-surface (18) diminue dans la direction radiale, dans lequel, de préférence, cette distance est inférieure, sur le bord radialement externe de la deuxième surface de friction (12), de maximum 1 mm, de préférence de maximum 0,2 mm, à la distance sur le bord radialement interne de la deuxième surface de friction (12).

11. Entraînement électromécanique selon l'une des revendications précédentes, **caractérisé en ce que** la première surface de friction (11) et/ou la première contre-surface (17) présentent, dans la direction radiale, un tracé incurvé
et/ou **en ce que** la deuxième surface de friction (12) et/ou la deuxième contre-surface (18) présentent, dans la direction radiale, un tracé incurvé.

12. Entraînement électromécanique selon l'une des revendications précédentes, **caractérisé en ce que** la partie interne (8) du disque de freinage (6) est fixée axialement à partie rotative (3) et/ou **en ce que** la partie interne (8) du disque de freinage (6) est reliée de manière rigide à la partie rotative (3), de préférence par l'intermédiaire de vis.

13. Entraînement électromécanique selon l'une des revendications précédentes, **caractérisé en ce que**, entre la partie interne (8) du disque de freinage (6) et la partie rotative (3), est disposée une première bague d'écartement (14), dans lequel, de préférence, la partie interne (8) du disque de freinage (6) est enserrée entre la première bague d'écartement (14) et une deuxième bague d'écartement (15), de préférence par l'intermédiaire de vis.

14. Entraînement électromécanique selon l'une des revendications précédentes, **caractérisé en ce que** l'entraînement électromécanique (1) est un entraînement à broche, dans lequel la partie rotative (3), avec laquelle le disque de freinage (6) est relié, est réalisée sous la forme d'un écrou fileté qui interagit avec la broche (23) de l'entraînement à broche.

15. Entraînement électromécanique selon l'une des revendications précédentes, **caractérisé en ce que** le disque de freinage (6) comprend un corps de base (24) en forme de disque et **en ce que** la première surface de friction (11) et/ou la deuxième surface de friction (12) sont constituées d'une garniture de freinage de préférence de forme annulaire, qui est appliqué sur le corps de base et/ou qui dépasse dans la direction axiale du corps de base (26).

16. Entraînement électromécanique selon l'une des revendications précédentes, **caractérisé en ce que** l'élément de freinage (7) est précontraint dans la direction de la position de freinage.

17. Entraînement électromécanique selon la revendication 16, **caractérisé en ce que** l'élément de freinage (7) est précontraint dans la direction de la position de freinage par une pluralité de ressorts (21), qui sont disposés de manière annulaire et de préférence de manière superposée avec la première contre-surface (17).

18. Entraînement électromécanique selon la revendication 17, **caractérisé en ce que** les ressorts (21) sont insérés dans une partie de boîtier (13b) amovible de l'entraînement électromécanique (1).

19. Entraînement électromécanique selon l'une des revendications précédentes, **caractérisé en ce que** le dispositif de freinage (5) comprend au moins un actionneur (22), de préférence sous la forme d'un électro-aimant, grâce auquel l'élément de freinage (6) peut être amené dans la position desserrée et/ou dans la position de freinage, dans lequel, de préférence l'actionneur (22) est inséré dans une partie de boîtier (13b) amovible de l'entraînement électromécanique (1).

20. Entraînement électromécanique selon l'une des revendications précédentes, **caractérisé en ce que** le moteur (2) et le dispositif de freinage (5) sont logés dans un boîtier (13) commun.

21. Machine de formage (20), plus particulièrement machine de cintrage, de préférence une presse de cintrage, avec au moins un entraînement pour le mouvement de travail, plus particulièrement un entraînement de presse, **caractérisé en ce que** l'au moins un entraînement est un entraînement électromécanique (1) selon l'une des revendications précédentes.
